# EUROPÄISCHE PATENTSCHRIFT

(11) **EP 1 866 459 B1**
(45) Veröffentlichungstag und Bekanntmachung des Hinweises auf die Patenterteilung: **01.01.2014**
(21) Anmeldenummer: 06707885.7
(22) Anmeldetag: 30.01.2006
(51) Int. Cl.: C23C 28/00, C23C 30/00, F01D 5/28, F23R 3/00

(54) **MATRIX UND SCHICHTSYSTEM**
MATRIX AND COATING SYSTEM
MATRICE ET SYSTÈME DE COUCHES

(30) Priorität: 31.03.2005 EP 05007093
(43) Veröffentlichungstag der Anmeldung: 19.12.2007
(73) Patentinhaber: Siemens Aktiengesellschaft, 80333 München (DE)
(72) Erfinder: JABADO, Rene, 14199 Berlin (DE); KRÜGER, Ursus, 14089 Berlin (DE); KÖRTVELYESSY, Daniel, 13469 Berlin (DE); REICHE, Ralph, 13465 Berlin (DE); RINDLER, Michael, 15566 Schöneiche (DE); STEINBACH, Jan, 13353 Berlin (DE)
(86) Internationale Anmeldenummer: PCT/EP2006/050506
(87) Internationale Veröffentlichungsnummer: WO 2006/103127

(56) Entgegenhaltungen:
- EP-A- 0 499 656
- WO-A-02/081868
- WO-A-2005/038075
- JP-A- 10 195 547
- US-A- 5 052 464

## Beschreibung

Die Erfindung betrifft eine Matrix gemäß Anspruch 1 und ein Schichtsystem gemäß Anspruch 35.

Bauteile für Hochtemperaturanwendungen, beispielsweise Turbinenschaufeln und Brennkammerwände von Gasturbinen, weisen Schutzschichten gegen Oxidation und Korrosion auf. Solche Schichten bestehen beispielsweise aus einer Legierung des Typs MCrAlX, wobei sich auf dieser MCrAlX-Schicht eine schützende Aluminiumoxid-Schicht bildet. Dabei diffundiert das Aluminium aus der MCrAlX-Legierung an die Oberfläche der MCrAlX-Schicht, sodass die Legierung an dem Element Aluminium verarmt.
Ein vorbeugend überhöhter Anteil an Aluminium in der MCrAlX-Legierung von Anfang an führt aber zu schlechteren mechanischen Eigenschaften einer MCrAlX-Schicht.

Außerdem sind Kompressorschaufeln bekannt, die mit Schutzschichten gegen Korrosion und Erosion versehen sind.
Diese weisen bei der Herstellung einen anorganischen Binder mit einem Metall auf, wobei das Metall als galvanisches Opferelement dient und daher elektrisch leitend mit dem Substrat des Bauteils verbunden ist. Eine geeignete Zusammensetzung einer solchen Schutzschicht ist aus der EP 0 142 418 B1 bekannt.
Auch hier besteht das Problem darin, dass sich das Metall mit der Zeit verbraucht, sodass die Schutzfunktion nicht mehr erfüllt wird.

Ummantelte abrasive keramische Pulverteilchen, die aus SiC (Nichtoxid-Keramik) bestehen, sind aus der US 4,741,973 bekannt.

Die EP 0 933 448 B1 offenbart Oxidteilchen in einer Schicht bestehend aus einem Aluminid.

Gemäß der zum Prioritätszeitpunkt dieser Anmeldung noch nicht veröffentlichten WO 2005/038075 A1 ist es bekannt, dass Matrixmaterialien in Form von Schichten mit interkristallinen Einlagerungen versehen werden können. Diese Einlagerungen sind als eine weitere Phase in der Matrix zu verstehen, wobei diese in unterschiedlichen Konzentrationen im Matrixmaterial vorgesehen werden können. Auch ist es möglich, innerhalb beispielsweise einer Schicht einen Konzentrationsgradienten in dieser Phase zu realisieren.

Gemäß der WO 02/081868 A1 ist eine keramische Wärmedämmschicht beschrieben, die auf einem Grundkörper, wie einer Gasturbinenschaufel, aufgebracht sein kann. Die Matrix kann beispielsweise aus spinellförmigen Magnesiumaluminad bestehen, in die Körner aus Magnesiumoxid als Partikel eingelagert sind. Auch andere Oxide können alternativ eingelagert werden.

Um die Verschleißbeständigkeit zu erhöhen, kann gemäß der EP 499 656 A1 auch vorgesehen werden, dass eine Schicht mit Carbid- oder Oxidpartikeln versehen wird. Die Partikel sind dabei in die Matrix der Schicht eingelagert, wobei die Matrix damit eine mechanische Verstärkungsschicht bildet.

Gemäß dem Abstract mit der Publikationsnummer 10195547 A zu einer japanischen Patentanmeldung ist es außerdem bekannt, dass ein Bauteil eine Schicht aus einer metallischen Matrix aufweisen kann. Die Matrix besteht aus einem MCrAlX-Material. In diese Matrix können Titannitrid-Körner eingefügt werden, welche eine Hülle aus einem Metalloxid aufweisen. Die Titannitrid-Körner weisen damit keine Legierungselemente auf, die sich im Matrixmaterial befinden. Auch die US 5,052,464 beschreibt eine Schicht, in der keramische Partikel in einer metallischen Matrix dispers verteilt sein können.

Es ist daher Aufgabe der Erfindung, eine Matrix und ein Schichtsystem aufzuzeigen, die eine längere Schutzwirkung aufweisen.

Die Aufgabe wird gelöst durch eine Matrix gemäß Anspruch 1 und ein Schichtsystem gemäß Anspruch 25.

In den jeweiligen Unteransprüchen 2 bis 24 und 26 bis 32 sind weitere vorteilhafte Maßnahmen aufgelistet.

Es zeigen
- Figur 1: ein Pulverteilchen,
- Figur 2 - 6: erfindungsgemäße Ausführungsbeispiele,
- Figur 7: eine Turbinenschaufel,
- Figur 8: eine Brennkammer und
- Figur 9: eine Gasturbine.

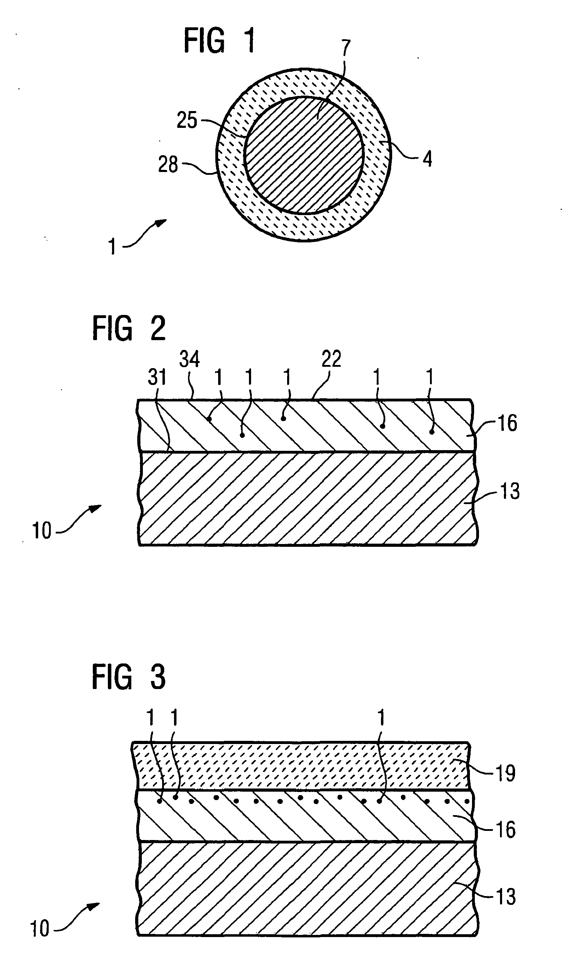

Figur 1 zeigt ein Teilchen 1 im Querschnitt für eine erfindungsgemäße Matrix.
Das Teilchen 1 besteht aus einem Kern 7 und einer Hülle 4. Der Kern 7 weist ein erstes Element (chemisches Element!) oder eine erste Verbindung auf. Eine Verbindung besteht aus mehreren chemischen Elementen.

Der Kern 7 kann aus einem Metall oder einem Metalloxid, also einem Oxid bestehen.
Der Kern 7 besteht nicht aus Siliziumkarbid (SiC) oder einer Nichtoxid-Keramik (z.B. Si₃N₄).
Ebenso kann der Kern 7 aus gesinterten Pulverteilchen oder einem Pulverkorn bestehen.
Der Kern 7 ist von einer Hülle 4 umgeben, die den Kern 7 zumindest teilweise, insbesondere ganz umhüllt.
Die Hülle 4 kann auch porös ausgebildet sein.

Der Durchmesser des Kerns 7 kann im Mikro, Submikro (<1µm) - oder Nanobereich (≤ 500nm) liegen. Als Durchmesser kann auch die größte Querlänge eines Polyeders (Kern 7) verstanden werden.

Das erste Element ist metallisch und kann beispielsweise Aluminium (A1) sein.
Ebenso kann das erste Element Chrom (Cr), eine Aluminium-Chrom-Legierung oder ein Aluminid sein. Ebenso kann der Kern 7 ein Gemisch aus zwei Metallen (beispielsweise Chrom und Aluminium) sein, die ggf. eine Legierung bilden können, aber nicht legiert sind.
Unter dem Begriff metallisch sollen auch Legierungen verstanden werden.
Weitere Beispiele für das erste Element sind Eisen (Fe), Titan (Ti), Platin (Pt), Yttrium (Y), Zink (Zn), Zinn (Sn) und/oder Kupfer (Cu).

Die Hülle 4 weist eine zweite Verbindung auf, die von dem ersten Element oder dem ersten Verbindung verschieden ist. Die zweite Verbindung, also das Material der Hülle 4, ist insbesondere eine Keramik (Nichtoxid- oder Oxidkeramik) und ist beispielsweise Aluminiumoxid und/oder Chromoxid oder ein anderes Metalloxid wie Eisenoxid oder Titanoxid oder ein Oxid des ersten metallischen Elementes oder metallischen Verbindung.

Ebenso kann ein organisches Material wie beispielsweise ein Si-O-C Verbindung für die Hülle 4 verwendet werden.
Das Si-O-C Verbindung ist insbesondere aus einem Polysiloxan-Harz hergestellt. Polysiloxan-Harze sind polymer-keramische Vorstufen der Strukturformel XSiO₁,₅, wobei X = -CH₃, -CH, -CH₂, -C₆Hₛ etc. sein kann. Das Material wird thermisch vernetzt, wobei anorganische Bestandteile (Si-O-Si-Ketten) und organische Seitenketten überwiegend aus X nebeneinander vorliegen. Anschließend werden die Vorstufen über eine Temperaturbehandlung in Ar, N₂, Luft- oder Vakuum-Atmosphäre bei

Temperaturen zwischen 600°C und 1200°C keramisiert. Dabei wird das polymere Netzwerk zersetzt und über thermische Zwischenstufen von amorphen bis kristalline Phasen neu strukturiert, wobei ausgehend von Polysiloxan-Vorstufen ein Si-O-C-Netzwerk entsteht.
Ebenso können auch von Vorstufen des Typs Polysilan (Si-Si), Polycarbosilan (Si-C), Polysilazan (Si-N) oder Polybarosilazan (Si-B-C-N) verwendet werden.

Somit sind beispielsweise folgende Materialkombinationen für das Teilchen 1 möglich (Organik = organisches Material):

| | |
|---|---|
| Kern 7 aus Metall - | Hülle 4 aus Oxid (Metalloxid oder Nichtmetalloxid), |
| Kern 7 aus Metall - | Hülle 4 aus Keramik (Organik oder Si-O-C), |
| Kern 7 aus Metall - | Hülle 4 aus Glas, |
| Kern 7 aus Metall - | Hülle 4 aus Polymer, |
| Kern 7 aus Oxid - | Hülle 4 aus Metall, |
| Kern 7 aus Oxid - | Hülle 4 aus Oxid (Metalloxid oder Nichtmetalloxid), |
| Kern 7 aus Oxid - | Hülle 4 aus Keramik (Organik oder Si-O-C), |
| Kern 7 aus Oxid - | Hülle 4 aus Glas. |

Erfindungsgemäß sind nur solche kombinationen, bei denen der Kern 7 ein Metall aufweist und die Hülle zumindest teilweise keramisch ist.

Die Hülle 4 weist einen Gradienten in der Konzentration eines ihrer Bestandteile auf. So wird der Kern 7 eines Pulverteilchens 1 beispielsweise aus Aluminium gebildet und die Hülle 4 teilweise aus Platin, wobei die Konzentration des Materials der Hülle, vorzugsweise des Platins ausgehend von der Oberfläche 25 des Kerns 7 bis zur äußeren Oberfläche 28 der Hülle 4 zunimmt. Dabei nimmt also die Konzentration des Kernmaterials, also beispielsweise Aluminium in der Hülle von innen nach außen ab und hat an der Oberfläche 28 der Hülle 4 vorzugsweise dieselbe oder eine höhere Konzentration verglichen mit dem Aluminium der Matrix.
Mehrschichtige Hüllen 4 sind auch denkbar.
Die Schichtdicke der Hülle 4 beträgt beispielsweise bis zu 1/5, insbesondere bis zu 1/10 des Durchmessers des Kerns 7 und ist vorzugsweise 10µm dick.

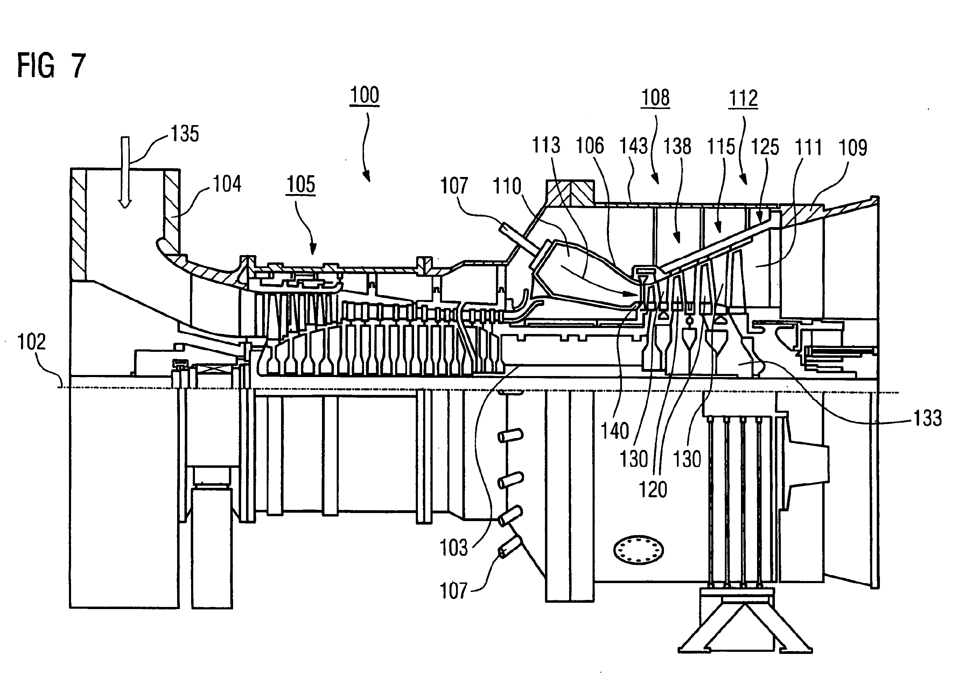

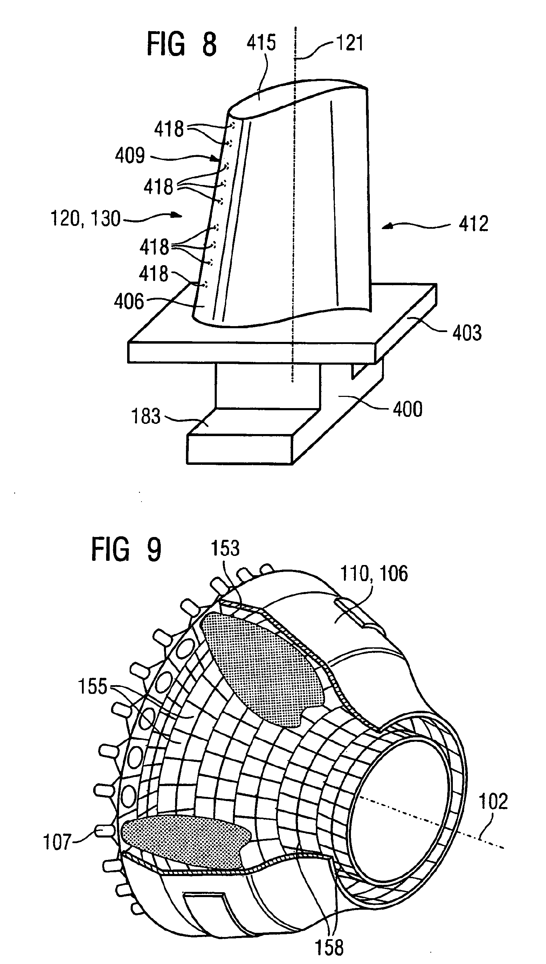

Figur 2 zeigt eine erfindungsgemäße Matrix einer Schicht 16. Die Schicht 16 ist ein Teil eines Bauteils 120, 130 (Fig. 7, 9), ein Brennkammerelement 155 (Fig. 8) oder eines Schichtsystems 10, das aus einem Substrat 13 besteht, auf dem die Schicht 16 angeordnet ist.
Das Substrat 13 ist beispielsweise ein Bauteil für hohe Temperaturen, wie zum Beispiel bei Dampf- oder Gasturbinen 100 (Fig. 9), bestehend aus einer nickel-, kobalt- oder eisenbasierten Superlegierung.
Anwendung finden solche Schichtsysteme 10 bei Turbinenschaufeln 120, 130, Hitzeschildelementen 155 oder Gehäuseteilen 138.

Die Schicht 16 weist eine Matrix aus einem Matrixmaterial auf, in der die Teilchen 1 homogen oder lokal unterschiedlich (beispielsweise mit einem Gradienten) verteilt sind. Vorzugsweise sind die Teilchen 1 homogen verteilt in der Matrix.

Dabei können auch mehrere Schichten 16, 19 hergestellt und verwendet werden, wobei die Teilchen 1 in einer oder mehreren Teilschichten oder Randschichten vorhanden sind. Die Teilchen 1 können mit fast jedem Beschichtungsverfahren zusammen aufgebracht werden, also mittels thermischen Plasmaspritzens (APS, VPS, LPPS), Kaltgasspritzens, HVOF oder eines elektrolytischen Beschichtungsverfahrens.
Die Matrix der Schicht 16 kann ein Metall, eine Keramik, ein Glas oder eine keramische/organische Verbindung (beispielsweise Si-O-C) sein.
Beispielsweise ist die Schicht 16 eine Legierung des Typs MCrAlX und die Teilchen 1 bestehen aus einem Kern 7 aus Aluminium. Vorzugsweise werden aluminiumreiche Legierungen verwendet. Die Teilchen 1 können in der ganzen Schicht 16 verteilt sein oder lokal konzentriert nahe der äußeren Oberfläche 22 der Schicht 16 angeordnet sein.

Wie schon weiter oben beschrieben, ergibt sich die Schutzfunktion der MCrAlX-Legierung dadurch, dass das Aluminium Aluminiumoxid bildet, dabei allerdings in dem Matrixmaterial verarmt.
Das Aluminium des Kerns 7 weist im Material der Hülle 4 beispielsweise einen um mindestens 5%, insbesondere 10% geringeren Diffusionskoeffizienten bei Einsatztemperaturen auf als das Aluminium in der Matrix der Schicht 16, also hier in der MCrAlX-Legierung.
Bei hohen Temperaturen diffundiert das Aluminium langsam durch die Hülle 4 in die Matrix der Schicht 16 und füllt so in dem Matrixmaterial das durch die Oxidation verbrauchte Aluminium wieder auf, sodass sich die ursprüngliche Zusammensetzung der MCrAlX-Legierung über die Betriebszeit kaum oder gar nicht verändert, bis sich kein Aluminium mehr in dem Pulverteilchen 1 befindet.
Damit wird erreicht, dass sich die Lebensdauer der Schutzschicht 16 erheblich verlängert.

Die Teilchen 1 können entweder nur in der Schicht 16 (MCrAlX) oder nur in dem Substrat 13 vorhanden sein. Ebenso ist es möglich, dass die Teilchen sowohl in einer Schicht 16 als auch im Substrat 13 angeordnet sind.

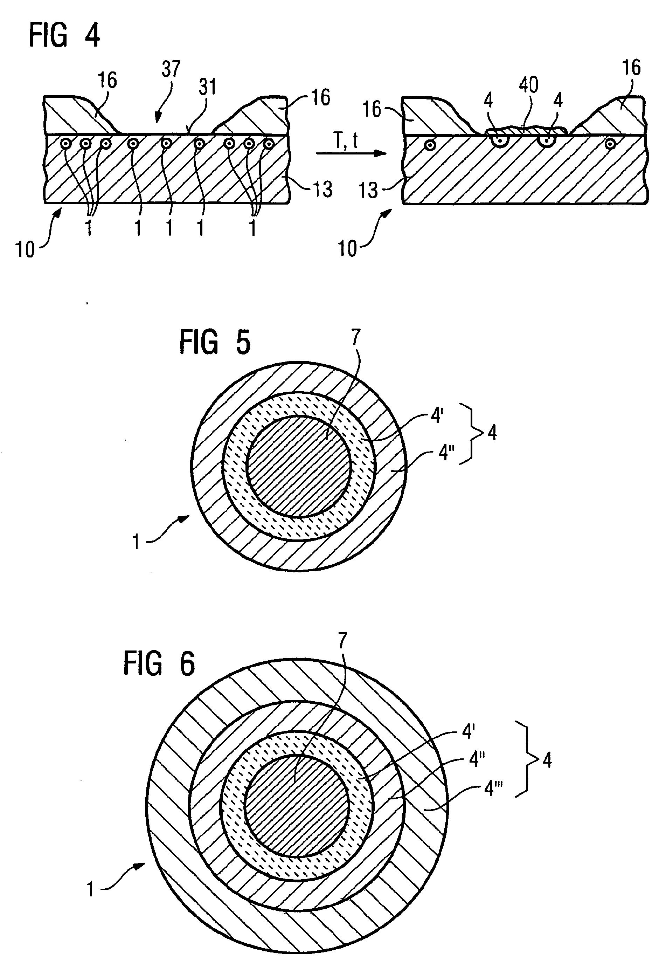

Unabhängig davon, ob die Teilchen 1 auch in einer Schicht 16 angeordnet sind, die auf dem Substrat 13 vorhanden sind, ergibt sich bei dem Vorhandensein der Teilchen 1 in dem Substrat 13 folgende Schutzfunktion:
Während des Einsatzes des Schichtsystems 10, kann es passieren, dass die Schicht 16 (MCrAlX oder MCrAlX + Keramik) in einem Bereich 37 abplatzt, so dass ein Teil einer Oberfläche 31 des Substrats 13 ungeschützt ist (Fig. 4). Jedoch sind im oberflächennahen Bereich die Teilchen 1 angeordnet. Durch den weiteren Einsatz des Schichtsystems 10 bei hohen Temperaturen T für längere Zeit t korrodiert die Oberfläche 31 des Substrats 13 im Bereich 37, wodurch die Hüllen 4 der Teilchen 1 sich abrasiv oder thermisch auflösen und der Kern 7 des Teilchens 1 freigesetzt wird. Durch eine Reaktion des Materials des Kerns 7 ergibt sich eine Schutzfunktion in dem Bereich 37 des Substrats 13. Im Falle von Superlegierungen, die für Gasturbinenschaufeln verwendet werden, besteht der Kern 7 aus Aluminium oder einer aluminiumhaltigen Legierung, so dass sich eine Schutzschicht 40 aus Aluminiumoxid in dem Bereich 37 bildet, die durch Oxidation des Aluminiums des Kerns 7 der Teilchen 1 entstanden ist.

Ebenso kann es möglich sein, dass durch die erhöhten Temperaturen, die die Teilchen 1 ohne eine Schicht 16 im Bereich 37 erfahren, die Diffusion durch die Hülle 4 erhöht wird, so dass auch ohne Aufbrechen der Hülle 4 das Aluminium an die Oberfläche in dem Bereich 37 gelangt und dort oxidieren kann, so dass sich eine schützende Oxidschicht 40 bilden kann. Ebenso können diese Teilchen 1 zur Verstärkung der Superlegierung verwendet werden, wie es von den so genannten ODS-Legierungen bekannt ist. Die Größe der Teilchen 1 entspricht 5 vorzugsweise der optimalen Größe der γ'-Phase einer Superlegierung.
Die Teilchen 1 sind vorzugsweise bereits in der Schmelze vorhanden und werden mit abgegossen. Bezüglich der Anordnungsweise und Wirkungsweise keramischer Teilchen in einer Superlegierung wird auf den Stand der Technik bezüglich ODS-Legierungen verwiesen. Die Teilchen 1 haben dann Funktion: Verbesserung der mechanischen Eigenschaften und Erzielung einer Notlaufeigenschaft.

Ebenso kann das Material der Hülle 4 so gewählt sein, dass sich die Hülle 4 durch Diffusion in der Kristallstruktur des Matrixmaterials der Schicht 16 auflöst und gegebenenfalls Ausscheidungen in dem Matrixmaterial bildet und so erst nach einer gewissen Zeit eine Diffusion des Materials des Kerns 7 direkt in die Matrix ermöglicht, da bis zu diesem Zeitpunkt die Schutzfunktion beispielsweise der MCrAlX-Schicht noch gegeben ist.
Dabei weist das zweite Element oder ein Element der zweiten Verbindung der Hülle 4 in dem Matrixmaterial beispielsweise einen höheren Diffusionskoeffizienten auf als im ersten Element oder in der ersten Verbindung.

Die Hülle 4 kann auch abrasiv und/oder thermisch und/oder chemisch aufgelöst werden, sodass der Kern 7 dadurch freigelegt wird.

Ebenso kann ein Metall, wie z.B. das Aluminium in der Schicht 16 einer Kompressorschaufel wie oben geschrieben von einer Hülle 4 beispielsweise aus Aluminiumoxid umgeben sein, wobei das Aluminiumoxid, wenn es zumindest im Bereich der Oberfläche angeordnet ist, zur Erhöhung des Erosionswiderstands beiträgt.

Ebenso kann die Schicht 16 eine Schutzschicht gegen Korrosion und/oder Erosion einer Kompressorschaufel darstellen, wobei die Teilchen 1 in einer Schicht 16 mit der chemischen Zusammensetzung gemäß des Patents EP 0 142 418 B1 dazu führen, dass über einen deutlich längeren Zeitraum genügend Opfermaterial zur Verfügung gestellt wird, damit sich die gewünschte Schutzfunktion ergibt.
Dabei ist das erste Element, insbesondere Aluminium, von einer Hülle 4 beispielsweise aus einem Binder oder Polymer umgeben.

Dabei kann ein örtlicher Konzentrationsgradient der Teilchen 1 innerhalb der Schicht 16 oder auch des Substrats 13 vorhanden sein. So nimmt beispielsweise die Konzentration der Teilchen 1 ausgehend von der Oberfläche 31 des Substrats 13 zu einer Oberfläche 34 der Schicht 16 zu.

Beim Verdichten von Luft im Verdichter kann Wasser ausfallen, das unter Umständen in Verbindung mit anderen in der Luft enthaltenen Elementen einen Elektrolyten bildet, welches zu Korrosion und Erosion an den Verdichterschaufeln führen kann. Um die Korrosion und/oder Erosion zu verhindern, werden Verdichterschaufeln daher in der Regel mit Beschichtungen versehen. Hierbei kommen insbesondere Beschichtungen 16 in Betracht, die eine beispielsweise phosphatgebundene Grundmatrix mit darin dispersiv verteilten Metallpartikeln wie etwa Aluminiumpartikel umfassen. Die Schutzwirkung einer derartigen Beschichtung besteht darin, dass die in der Grundbeschichtung eingebetteten Metallpartikel zusammen mit dem (edleren) Metall der Verdichterschaufel und dem Elektrolyten eine galvanische Zelle bilden, in welcher die Metallpartikel sog. Opfer-Anoden bilden. Die Oxidation bzw. die Korrosion findet dann in den Opfer-Anoden statt, d.h. in den Metallpartikeln und nicht im Metall der Verdichterschaufel.

Die phosphatgebundene Grundmatrix der Beschichtung hat glaskeramische Eigenschaften, ist thermisch stabil, ebenfalls korrosionsbeständig und schützt gegen mechanische Einwirkungen, etwa Abrasion und Erosion.

Neben den Metallpartikeln kann die Beschichtung weitere Partikel als Füllstoffe enthalten. Beispielhaft seien an dieser Stelle Farbstoffpartikel genannt.

Neben phosphatgebundenen Beschichtungen kommen weitere Arten von Beschichtungen 16 in Betracht. Die EP 0 142 418 B1, die EP 0 905 279 A1 und die EP 0 995 816 A1 beschreiben Beschichtungen auf Chromat/Phosphat-Basis. Die EP 1 096 040 A2 beschreibt eine Beschichtung 16 auf Phosphat/Borat-Basis und die EP 0 933 446 B1 beschreibt eine Beschichtung auf Phosphat/Permanganat-Basis.

Figur 3 zeigt ein weiteres Anwendungsbeispiel der erfindungsgemäßen Schicht 16.
Das Schichtsystem 10 besteht aus einem Substrat 13, einer erfindungsgemäßen Schicht 16 mit einer weiteren Schicht 19 auf der Matrix der Schicht 16.
Dies ist beispielsweise ein Schichtsystem 10 für Hochtemperaturanwendungen, wobei das Substrat 13 wieder eine Superlegierung wie oben beschrieben darstellt und die Schicht 16 eine Matrix des Typs MCrAlX aufweist. Dann stellt die Schicht 19 eine keramische Wärmedämmschicht dar, wobei sich zwischen der Schicht 16 und der Schicht 19 die schützende Aluminiumoxid-Schicht (TGO) bildet (nicht dargestellt). Die erfindungsgemäßen Teilchen 1 sind beispielsweise nahe der Grenzfläche zwischen den Schichten 16 und 19 konzentriert.

Ebenso kann man sich ein Bauteil aus einem Material vorstellen, das die Teilchen 1 aufweist, d.h. sie sind nicht in einer Beschichtung vorhanden, sondern in einem massiven Material.

Figur 5 zeigt ein weiteres erfindungsgemäßes Teilchen 1.
Das Teilchen 1 besteht wiederum aus einem Kern 7, einer inneren Hülle 4' um den Kern 7 und einer weiteren Hülle 4'' um die innere Hülle 4'.
Das Teilchen 1 kann also mehrschichtige Hüllen 4 aufweisen. Vorzugsweise weist der Kern 7 ein Metall, die Hülle 4' eine Keramik und die äußere Hülle 4'' ein Metall auf.
Ebenso vorteilhaft ist es, wenn der Kern 7 aus einem Metall die innere Hülle 4' wiederum ein Metall, das insbesondere von dem Material des Kerns 7 verschieden ist und eine äußere Hülle 4'' aus einer Keramik aufweist.

Ein weiteres Teilchen 1 für eine erfindungsgemäße Matrix 1 ist in Figur 6 abgebildet.
Das Teilchen 1 weist eine dreischichtige Hülle auf. Ausführungsbeispiele für die Abfolge des Materials in den Hüllmaterialien 4', 4'', 4''' ist in der folgenden Tabelle gezeigt.

| | | | | | | | |
|---|---|---|---|---|---|---|---|
| | Material | Material | Material | Material | Material | Material | Material |
| 4' | Metall | Metall | Metall | Metall | Keramik | Keramik | Keramik |
| 4'' | Metall | Keramik | Keramik | Metall | Metall | Metall | Keramik |
| 4''' | Keramik | Metall | Keramik | Metall | Metall | Keramik | Metall |

Das Metall der Hülle 4' kann von dem Metall der Hülle 4'' bzw. 4''' verschieden sein.
Auch können die Metalle der Hüllen 4', 4'' (Fig. 5) und 4''' (Fig. 6) von dem Metall des Kerns 7 verschieden sein.

Die Schichtdicken der Hüllen 4, 4', 4'' können individuell angepasst werden, vor allem unterschiedlich sein.

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer). Die MCrAlX-Schicht oder das Substrat weist die erfindungsgemäße Matrix auf.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die MCrAlX-Schicht oder das Substrat des Hitzeschildelements 155 weist die erfindungsgemäße Matrix auf.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die Figur 9 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Matrix
für ein Bauteil (10, 120, 130, 138, 155) oder eine Schicht (16, 19),
aufweisend ein Matrixmaterial,
das Teilchen (1)
mit einem Kern (7),
aufweisend ein erstes Element und
einer Hülle (4) um den Kern (7),
aufweisend eine zweite Verbindung,
enthält, wobei
das erste Element aus
einem Metall besteht und wobei
die Hülle (4, 4', 4'', 4''') zumindest teilweise keramisch,
insbesondere ein Metalloxid,
ist,
**dadurch gekennzeichnet, dass**
die Hülle (4) einen Konzentrationsgradienten des ersten Elements aufweist, wobei die Konzentration des ersten Elements von innen nach außen zur Oberfläche (28) der Hülle (4) abnimmt und dass das erste Element ein Element des Matrixmaterials ist.

2. Matrix nach Anspruch 1,
**dadurch gekennzeichnet, dass**
der Kern (7) keine Nichtoxidkeramik ist.

3. Matrix nach Anspruch 1 oder 2,
**dadurch gekennzeichnet, dass**
der Kern (7) metallisch ist.

4. Matrix nach Anspruch 1 oder 3,
**dadurch gekennzeichnet, dass** das erste Element Chrom ist.

5. Matrix nach Anspruch 1 oder 3,
**dadurch gekennzeichnet, dass**
das erste Element Aluminium ist.

6. Matrix nach Anspruch 1 oder 3,
**dadurch gekennzeichnet, dass**
der Kern (7) Aluminium und Chrom aufweist.

7. Matrix nach Anspruch 1,
**dadurch gekennzeichnet, dass**
der Kern aus einer aluminiumreichen Legierung, insbesondere eine Aluminium-Chrom-, eine Nickel-AluminiumLegierung oder ein Aluminid besteht.

8. Matrix nach Anspruch 1,
**dadurch gekennzeichnet, dass**
die zweite Verbindung Aluminiumoxid (Al₂O₃) und/oder Chromoxid (Cr₂O₃) ist.

9. Matrix nach Anspruch 1,
**dadurch gekennzeichnet, dass**
die zweite Verbindung eine organische Verbindung ist, insbesondere eine Si-O-C-Verbindung.

10. Matrix nach Anspruch 1,
**dadurch gekennzeichnet, dass**
die Hülle (4) porös ist.

11. Matrix nach Anspruch 1, 2, 3, 4, 5, 6 oder 7,
**dadurch gekennzeichnet, dass**
der Kern (7) kornartig ausgebildet ist.

12. Matrix nach Anspruch 1,
**dadurch gekennzeichnet, dass**
das Matrixmaterial keramisch oder glaskeramisch ist.

13. Matrix nach Anspruch 1,
**dadurch gekennzeichnet, dass**
das Matrixmaterial metallisch ist.

14. Matrix nach Anspruch 1 oder 10,
**dadurch gekennzeichnet, dass**
die Hülle (4) mehrschichtig (4', 4'', 4''') aufgebaut ist.

15. Matrix nach Anspruch 14,
**dadurch gekennzeichnet, dass**
die Hülle (4) aus zwei Schichten (4', 4'') besteht.

16. Matrix nach Anspruch 15,
**dadurch gekennzeichnet,**
**dass** der Kern (7) metallisch ist,
die erste Hülle (4') um den Kern (7) metallisch ist und dass die äußere Hülle (4'') auf der inneren Hülle (4') eine keramische Schicht ist.

17. Matrix nach Anspruch 14,
**dadurch gekennzeichnet, dass**
der Kern (7) metallisch ist,
die Hülle (4') um den Kern (7) aus einer Keramik und eine äußere Hülle (4'') metallisch ist.

18. Matrix nach Anspruch 1, 10oder 14,
**dadurch gekennzeichnet, dass**
die Hülle (4) aus drei Schichten (4', 4'', 4''') besteht.

19. Matrix nach Anspruch 18,
**dadurch gekennzeichnet, dass**
metallisch ist,
die erste Hülle (4) aus einer Keramik,
die zweite Hülle (4'') metallisch und
die äußere Hülle (4''') aus Keramik ist.

20. Matrix nach Anspruch 18,
**dadurch gekennzeichnet, dass**
der Kern (7) metallisch ist,
die erste Hülle (4') metallisch,
die zweite Hülle (4'') metallisch und
die äußere Hülle (4''') aus Keramik ist.

21. Matrix nach einem der Ansprüche 14 bis 20,
**dadurch gekennzeichnet, dass**
die Schichtdicken der Schichten (4', 4'') unterschiedlich dick ausgebildet sind.

22. Matrix nach Anspruch 1 oder 13,
**dadurch gekennzeichnet, dass**
das Matrixmaterial eine Legierung des Typs MCrAlX ist.

23. Matrix nach Anspruch 1 oder 11,
**dadurch gekennzeichnet, dass**
der Durchmesser des Kerns (7) ≤ 500nm ist, insbesondere ≤ 100nm.

24. Matrix nach Anspruch 1, 14, 15 oder 18,
**dadurch gekennzeichnet, dass**
die Dicke der Hülle (4) höchstens 1/5,
insbesondere höchstens 1/10 des Durchmessers des Kerns (7) beträgt,
insbesondere 10µm.

25. Schichtsystem,
das ein Substrat (13) und/oder
das zumindest eine Schicht (16),
die auf dem Substrat (13) angeordnet ist,
aufweist,
die (13, 16) eine Matrix gemäß einem oder mehreren der Ansprüche 1 bis 24 aufweist.

26. Schichtsystem nach Anspruch 25,
**dadurch gekennzeichnet, dass**
auf der Schicht (16) eine weitere Schicht (19) angeordnet ist.

27. Schichtsystem nach Anspruch 25 oder 26,
**dadurch gekennzeichnet, dass**
innerhalb der Schicht (16) und/oder des Substrats (13) ein Gradient in der Konzentration der Teilchen (1) besteht.

28. Schichtsystem nach Anspruch 25 bis 27,
**dadurch gekennzeichnet, dass**
nur das Substrat (13) eine Matrix gemäß einem oder mehreren der Ansprüche 1 bis 34 aufweist.

29. Schichtsystem nach Anspruch 25, 26 oder 27,
**dadurch gekennzeichnet, dass**
nur die Schicht (16) eine Matrix gemäß einem oder mehreren der Ansprüche 1 bis 34 aufweist.

30. Schichtsystem nach Anspruch 25 bis 29,
**dadurch gekennzeichnet, dass**
das Substrat (13) eine kobalt-, nickel- oder eisenbasierte Superlegierung ist,
auf der insbesondere eine Schicht (16) mit einer Matrix aus MCrAlX aufgebracht ist,
auf der insbesondere eine keramische Wärmedämmschicht, insbesondere bestehend aus dem Material Zirkonoxid, vorhanden ist.

31. Schichtsystem nach Anspruch 25 bis 30,
**dadurch gekennzeichnet, dass**
das Schichtsystem (10) für ein Bauteil,
insbesondere für eine Turbinenschaufel (120, 130), ein Hitzeschildelement (155) oder ein Gehäuseteil (138) einer Turbine,
insbesondere einer Gas- (100) oder Dampfturbine verwendet wird.

32. Schichtsystem nach Anspruch 31,
**dadurch gekennzeichnet, dass**
das Schichtsystem (10) für eine Kompressorschaufel, insbesondere einer Gasturbine (100),
verwendet wird.

## Claims

1. Matrix for a component (10, 120, 130, 138, 155) or a layer (16, 19), comprising a matrix material which contains particles (1) with a core (7) comprising a first element, and a shell (4) comprising a second compound around the core (7), the first element consisting of a metal, and the shell (4, 4', 4'', 4''') being at least partially ceramic, in particular a metal oxide,
**characterized in that** the shell (4) has a concentration gradient of the first element, the concentration of the first element decreasing from the inside outward to the surface (28) of the shell (4) and **in that** the first element is an element of the matrix material.

2. Matrix according to Claim 1, **characterized in that** the core (7) is not a nonoxide ceramic.

3. Matrix according to Claim 1 or 2, **characterized in that** the core (7) is metallic.

4. Matrix according to Claim 1 or 3, **characterized in that** the first element is chromium.

5. Matrix according to Claim 1 or 3, **characterized in that** the first element is aluminum.

6. Matrix according to Claim 1 or 3, **characterized in that** the core (7) comprises aluminum and chromium.

7. Matrix according to Claim 1, **characterized in that** the core consists of an aluminum-rich alloy, in particular an aluminum-chromium alloy, a nickel-aluminum alloy or an aluminide.

8. Matrix according to Claim 1, **characterized in that** the second compound is aluminum oxide (Al₂O₃) and/or chromium oxide (Cr₂O₃).

9. Matrix according to Claim 1, **characterized in that** the second compound is an organic compound, in particular an Si-O-C compound.

10. Matrix according to Claim 1, **characterized in that** the shell (4) is porous.

11. Matrix according to Claim 1, 2, 3, 4, 5, 6 or 7, **characterized in that** the core (7) is granularly designed.

12. Matrix according to Claim 1, **characterized in that** the matrix material is ceramic or glass-ceramic.

13. Matrix according to Claim 1, **characterized in that** the matrix material is metallic.

14. Matrix according to Claim 1 or 10, **characterized in that** the shell (4) is constructed in multiple layers (4', 4'', 4''').

15. Matrix according to Claim 14, **characterized in that** the shell (4) consists of two layers (4', 4'').

16. Matrix according to Claim 15, **characterized in that** the core (7) is metallic, the first shell (4') around the core (7) is metallic, and **in that** the outer shell (4'') on the inner shell (4') is a ceramic layer.

17. Matrix according to Claim 14, **characterized in that** the core (7) is metallic, the shell (4') around the core (7) is of a ceramic and an outer shell (4'') is metallic.

18. Matrix according to Claim 1, 10 or 14, **characterized in that** the shell (4) consists of three layers (4', 4'', 4''').

19. Matrix according to Claim 18, **characterized in that** the core (7) is metallic, the first shell (4') is of a ceramic, the second shell (4'') is metallic and the outer shell (4''') is of ceramic.

20. Matrix according to Claim 18, **characterized in that** the core (7) is metallic, the first shell (4') is metallic, the second shell (4'') is metallic and the outer shell (4''') is of ceramic.

21. Matrix according to one of Claims 14 to 20, **characterized in that** the layer thicknesses of the layers (4', 4'') are designed to be differently thick.

22. Matrix according to Claim 1 or 13, **characterized in that** the matrix material is an alloy of the MCrAlX type.

23. Matrix according to Claim 1 or 11, **characterized in that** the diameter of the core (7) is ≤ 500 nm, in particular ≤ 100 nm.

24. Matrix according to Claim 1, 14, 15 or 18, **characterized in that** the thickness of the shell (4) is at most 1/5, in particular at most 1/10 of the diameter of the core (7), in particular 10 µm.

25. Layer system which comprises a substrate (13) and/or at least one layer (16) which is arranged on the substrate (13), which (13, 16) comprises a matrix according to one or more of Claims 1 to 24.

26. Layer system according to Claim 25, **characterized in that** a further layer (19) is arranged on the layer (16).

27. Layer system according to Claim 25 or 26, **characterized in that** there is a gradient in the concentration of the particles (1) inside the layer (16) and/or the substrate (13).

28. Layer system according to Claims 25 to 27, **characterized in that** only the substrate (13) comprises a matrix according to one or more of Claims 1 to 24.

29. Layer system according to Claim 25, 26 or 27, **characterized in that** only the layer (16) comprises a matrix according to one or more of Claims 1 to 24.

30. Layer system according to Claims 25 to 29, **characterized in that** the substrate (13) is a cobalt-, nickel- or iron-based superalloy on which in particular a layer (16) with a matrix of MCrAlX is applied, on which in particular there is a ceramic thermal insulation layer in particular consisting of the material zirconium oxide.

31. Layer system according to Claims 25 to 30, **characterized in that** the layer system (10) is used for a component, in particular for a turbine blade (120, 130), a heat shield element (155) or a housing part (138) of a turbine, in particular a gas turbine (100) or steam turbine.

32. Layer system according to Claim 31, **characterized in that** the layer system (10) is used for a compressor blade, in particular of a gas turbine (100).

## Revendications

1. Matrice
pour un élément (10, 120, 130, 138, 155) ou une couche ( 16, 19 ),
comportant un matériau de matrice,
qui contient des particules ( 1 ),
ayant un noyau ( 7 ),
comportant un premier élément et
une gaine ( 4 ) autour du noyau ( 7 ),
comportant un deuxième composé,
dans lequel
le premier élément est
en un métal et dans lequel
la gaine ( 4, 4', 4'', 4''' ) est au moins en partie céramique,
en étant notamment un oxyde métallique,
**caractérisée en ce que**
la gaine ( 4 ) a un gradient de concentration du premier élément, la concentration du premier élément diminuant de l'intérieur vers l'extérieur en direction de la surface ( 28 ) de la gaine ( 4 ) et **en ce que** le premier élément est un élément du matériau de matrice.

2. Matrice suivant la revendication 1,
**caractérisée en ce que**
le noyau ( 7 ) n'est pas une céramique n'ayant pas d'oxyde.

3. Matrice suivant la revendication 1 ou 2,
**caractérisée en ce que**
le noyau ( 7 ) est métallique.

4. Matrice suivant la revendication 1 ou 3, **caractérisée en ce que**
le premier élément est du chrome.

5. Matrice suivant la revendication 1 ou 3, **caractérisée en ce que**
le premier élément est de l'aluminium.

6. Matrice suivant la revendication 1 ou 3, **caractérisée en ce que**
le noyau ( 7 ) comporte de l'aluminium et du chrome.

7. Matrice suivant la revendication 1,
**caractérisée en ce que**
le noyau est en un alliage riche en aluminium, notamment en un alliage d'aluminium et de chrome, en un alliage de nickel et d'aluminium ou est un aluminure.

8. Matrice suivant la revendication 1,
**caractérisée en ce que**
le deuxième composé est de l'oxyde d'aluminium (Al₂O₃) et/ou de l'oxyde de chrome (Cr₂O₃).

9. Matrice suivant la revendication 1,
**caractérisée en ce que**
le deuxième composé est un composé organique, notamment un composé Si-O-C.

10. Matrice suivant la revendication 1,
**caractérisée en ce que**
la gaine ( 4 ) est poreuse.

11. Matrice suivant la revendication 1, 2, 3, 4, 5, 6 ou 7,
**caractérisée en ce que**
le noyau ( 7 ) est constitué en étant de type en grain.

12. Matrice suivant la revendication 1,
**caractérisée en ce que**
le matériau de matrice est céramique ou céramique vitreux.

13. Matrice suivant la revendication 1,
**caractérisée en ce que**
le matériau de matrice est métallique.

14. Matrice suivant la revendication 1 ou 10,
**caractérisée en ce que**
la gaine ( 4 ) est constituée de plusieurs couches ( 4', 4'', 4''' ).

15. Matrice suivant la revendication 14,
**caractérisée en ce que**
la gaine ( 4 ) est constituée de deux couches ( 4', 4'' ).

16. Matrice suivant la revendication 15,
**caractérisée en ce que**
le noyau ( 7 ) est métallique,
la première gaine ( 4' ) autour du noyau ( 7 ) est métallique et
la gaine ( 4'' ) extérieure sur la gaine ( 4' ) intérieure est une couche céramique.

17. Matrice suivant la revendication 14,
**caractérisée en ce que**
le noyau ( 7 ) est métallique,
la gaine ( 4' ) autour du noyau ( 7 ) est en une céramique et
une gaine ( 4'' ) extérieure est métallique.

18. Matrice suivant la revendication 1, 10 ou 14, **caractérisée en ce que**
la gaine ( 4 ) est constituée de trois couches ( 4', 4'', 4''' ).

19. Matrice suivant la revendication 18,
**caractérisée en ce que**
elle est métallique,
la première gaine ( 4 ) est en une céramique,
la deuxième gaine ( 4'' ) est métallique et
la couche ( 4''' ) extérieure est en une céramique.

20. Matrice suivant la revendication 18,
**caractérisée en ce que**
le noyau ( 7 ) est métallique,
la première gaine ( 4 ) est métallique,
la deuxième gaine ( 4'' ) est métallique et
la couche ( 4''' ) extérieure est en une céramique.

21. Matrice suivant l'une des revendications 14 à 20,
**caractérisée en ce que**
les épaisseurs des couches ( 4', 4'' ) sont différentes.

22. Matrice suivant la revendication 1 ou 13,
**caractérisée en ce que**
le matériau de matrice est un alliage du type MCrAlx.

23. Matrice suivant la revendication 1 ou 11,
**caractérisée en ce que**
le diamètre du noyau ( 7 ) est ≤ 500 nm,
en étant notamment ≤ 100 nm.

24. Matrice suivant la revendication 1, 14, 15 ou 18,
**caractérisée en ce que**
l'épaisseur de la gaine ( 4 ) représente au plus 1/5, notamment au plus 1/10 du diamètre du noyau ( 7 ),
en étant notamment de 10 µm.

25. Système stratifié,
qui a un substrat ( 13 ) et/ou
qui a au moins une couche ( 16 ),
qui est disposée sur le substrat ( 13 ),
qui ( 13, 16 ) a une matrice suivant l'une ou plusieurs des revendications 1 à 24.

26. Système stratifié suivant la revendication 25,
**caractérisé en ce que**
une autre couche ( 19 ) est disposée sur la couche ( 16 ).

27. Système stratifié suivant la revendication 25 ou 26,
**caractérisé en ce que**
il y a un gradient de concentration des particules ( 1 ) au sein de la couche ( 16 ) et/ou du substrat ( 13 ).

28. Système stratifié suivant l'une des revendications 25 à 27,
**caractérisé en ce que**
seul le substrat ( 13 ) a une matrice suivant l'une ou plusieurs des revendications 1 à 24.

29. Système stratifié suivant la revendication 25, 26 ou 27,
**caractérisé en ce que**
seule la couche (16) a une matrice suivant l'une ou plusieurs des revendications 1 à 24.

30. Système stratifié suivant l'une des revendications 25 à 29,
**caractérisé en ce que**
le substrat ( 13 ) est un super alliage à base de cobalt, de nickel ou de fer,
sur lequel est déposée notamment une couche ( 16 ) ayant une matrice en MCrAlx,
sur laquelle il y a notamment une couche céramique calorifuge, constituée notamment en le matériau oxyde de zirconium.

31. Système stratifié suivant l'une des revendications 25 à 30,
**caractérisé en ce que**
le système (10) stratifié est utilisé pour un élément, notamment pour une aube ( 120, 130 ) de turbine, un élément ( 155 ) de bouclier thermique ou une partie ( 138 ) de carter d'une turbine,
notamment d'une turbine à gaz (100) ou d'une turbine à vapeur.

32. Système stratifié suivant la revendication 31,
**caractérisé en ce que**
le système (10) stratifié est utilisé pour une aube de compresseur,
notamment d'une turbine ( 5 ) à gaz.
